# EUROPÄISCHE PATENTSCHRIFT

(11) **EP 2 704 272 B1**
(45) Veröffentlichungstag und Bekanntmachung des Hinweises auf die Patenterteilung: **01.11.2017**
(21) Anmeldenummer: 12182204.3
(22) Anmeldetag: 29.08.2012
(51) Int. Cl.: H02B 1/044, H01H 3/02

(54) **BEFEHLS- UND MELDEGERÄT ZUR MONTAGE IN EINE MONTAGEBOHRUNG EINER MONTAGEPLATTE**
CONTROL AND SIGNALING DEVICE TO BE MOUNTED IN THE MOUNTING BORE OF A MOUNTING PLATE
DISPOSITIF DE COMMANDE ET DE SIGNALISATION DESTINE A ETRE MONTE DANS L'ORIFICE DE MONTAGE D'UNE PLAQUE DE MONTAGE

(43) Veröffentlichungstag der Anmeldung: 05.03.2014
(73) Patentinhaber: Siemens Aktiengesellschaft, 80333 München (DE)
(72) Erfinder: Hensch, Waldemar, 93057 Regensburg (DE); Demleitner, Johann, 92272 Freudenberg (DE)

(56) Entgegenhaltungen:
- DE-A1- 2 311 158
- DE-A1- 3 340 659
- DE-U1- 9 109 678

## Beschreibung

Die Erfindung betrifft ein Befehls- und Meldegerät mit einem Bedienelement, das einen zylindrischen Grundkörper aufweist, und einer Haltevorrichtung zur Befestigung des Bedienelements sowie ein Verfahren zur Montage bzw. Demontage eines Befehls- und Meldegeräts.

Eine derartige Befehls- und Meldevorrichtung kommt bei Maschinen oder elektrischen Anlagen zum Einsatz, die über Befehlsgeräte wie zum Beispiel Drucktaster, Wahlschalter usw., die auf die Steuerung einwirken, bedient werden. Diese Befehlsgeräte werden in Schalttafeln, Bedientableaus, Schaltschranktüren oder Gehäusedeckel montiert. Befehlsgeräte sind in der Regel modular aufgebaut. Das bedeutet, sie bestehen aus einem Betätiger, einem Befestigungsteil wie zum Beispiel einer Ringmutter oder einem speziellen Montagehalter und einem oder mehreren Schaltelementen, die als Öffner- oder Schließer-Schaltglieder ausgeführt sind. Zur Montage wird der Betätiger in der Regel von vorn durch eine Öffnung in der Schalttafel geführt und von hinten mittels eines Befestigungsteils montiert. Schaltelemente werden mit Schrauben, Schnapphaken oder riegelmechanisch am Betätiger oder am Befestigungsteil fixiert. Die elektrische Verbindung der Schaltelemente mit der Steuerung erfolgt über Anschlussklemmen.

Bei Sicherheitsanwendungen wie zum Beispiel Not-Halt-Befehlsgeräten ist es Vorschrift, dass das Signal durch das Öffnen von zwangsöffnenden Kontakten erzeugt wird. Das heißt, dass bei einem unbetätigten Not-Halt-Befehlsgerät die Kontakte und damit der zugehörige Stromkreis geschlossen sind. Im Störungs- oder Notfall wird durch Schlagen auf den Not-Halt-Betätiger, der sich vor der Schalttafel befindet, der Öffnerkontakt unterbrochen und die Anlage oder Maschine in einen sicheren Zustand versetzt. Dies funktioniert jedoch nur, wenn die räumliche Zuordnung zwischen Betätiger und Schaltelement sichergestellt ist. Durch mangelhafte Montage oder durch Gewalteinwirkung kann es vorkommen, dass die Schaltelemente mechanisch vom Betätiger getrennt werden. In diesem Fall ist das Not-Halt-Befehlsgerät nicht mehr funktionsfähig, das heißt, bei einer Betätigung im Notfall werden die Kontakte nicht geöffnet, und damit erfolgt auch keine Beseitigung des Gefahrenzustands. Dies kann zu fatalen Schäden für Mensch und Maschine führen. Daher kommt der sicheren Verbindung zwischen Betätiger und Schaltelement eine wesentliche Bedeutung zu.

Ein weiteres entscheidendes Erfolgskriterium für ein Befehls- und Meldegerät ist neben Handling, Optik, Festsitz, Zuverlässigkeit und Qualität auch die Montagefreundlichkeit des Produkts. Die Montagefreundlichkeit wird im Wesentlichen durch das Befestigungssystem geprägt. Der modulare Aufbau eines kompletten Befehls- und Meldegeräts besteht aus den drei Komponenten: Bedien- und/oder Anzeigeelement, Befestigungselement und Funktionselement (Schaltelement, Beleuchtung, Kommunikation, etc.). Für die unterschiedlichen Einsatzgebiete des Produkts werden die Befehls- und Meldegeräte in unterschiedlichen Baureihen angeboten. Es gibt die Bedien- und/oder Anzeigeelemente und Befestigungselemente sowohl aus Kunststoff, als auch aus Metall gefertigt. Denkbar ist auch das Bedien- und/oder Anzeigeelement aus Metall und das Befestigungselement aus Kunststoff zu fertigen.

Neben dem modularen Aufbau einer Befehls- und Meldestelle gibt es auch die günstigere kompakte Bauform. Hier besteht das Befehls- und Meldegerät aus zwei Komponenten: dem Bedien- und/oder Anzeigeelement mit integriertem Funktionsmodul (Schaltkontakt, Beleuchtung, etc.) und dem Befestigungselement.

Am Markt ist eine Vielzahl von unterschiedlichen Befestigungskonzepten verfügbar. Für den modularen Aufbau lassen sie sich jedoch in zwei Grundprinzipien unterteilen. Ein zweiteilig, getrenntes Haltesystem weist zum Einen ein Haltesystem A auf, das ein Befestigungselement zum Festsitz des Bedienelements verwendet. Zudem weist dieses zweiteilige Haltesystem ein Haltesystem B auf, das ein Trägerelement zum Festsitz der Funktionsmodule beinhaltet. Eine sehr kostengünstige Lösung ist dabei die Kombination aus einer Ringmutter für den Festsitz des Bedienelements mit einem separaten einfachen Kunststoffteil für den Festsitz der Funktionsmodule. Diese kostengünstige Lösung erhöht jedoch den Montageaufwand einer kompletten Befehlsstelle und bewirkt Einschränkungen hinsichtlich des Festsitzes, der Zuverlässigkeit und der Qualität.

Beim einteilig kombinierten Haltesystem erfolgt der Festsitz des Bedienelements mittels eines Haltesystems, welches additiv den Festsitz der Funktionsmodule beinhaltet.

Dazu geht aus der EP 0 889 564 A1 ein elektrisches Befehls- oder Meldegerät hervor, das eine Drucktaste aufweist, die einen Körper umfasst, der aus einem Kopf und einem rohrförmigen Teil besteht, im Allgemeinen in zylindrischer Form, und mit einem Durchmesser, der geringer ist als die Breite des Kopfes. Das Gerät ist so auf eine dünne Trägerwand montiert, dass der Kopf eventuell mit einer Dichtung auf dem sichtbaren Teil dieser dünnen Trägerwand aufliegt, die Teil eines Gehäuses sein kann. Die Wand ist mit einem runden Loch durchbohrt, in welches der rohrförmige Teil der Drucktaste eingesetzt wird.

Die Befestigung der Drucktaste erfolgt mit Hilfe eines Befestigungssockels in einer, im Allgemeinen rechteckigen Form. Dieser Sockel besteht aus einem Körper und einer Kontaktträgerplatte, die mit bekannten Mitteln mit diesem Körper verbunden ist. Der Körper hat eine zentrale Bohrung, die geeignet ist, den rohrförmigen Körper aufzunehmen. Die Kontaktträgerplatte ist mit einer zentralen Bohrung versehen und dient dazu, auf bewegliche Weise und nach Verriegelung, beweglich elektrische Sätze wie Schalter, Kontaktsätze oder Hilfssätze aufzunehmen. Der Sockel wird in den rohrförmigen Teil eingesetzt und mit diesem durch einen Schiebeverschluss verbunden, der die Form eines Bügels hat und die Extraktion des Sockels in Achsrichtung verhindert.

Dieser Verschluss hat außen einen Betätigungsstift. Er wird in Gleitschienen des Sockels geführt und unterliegt einer Verriegelungsfeder, die versucht, ihn in Richtung der Symmetrieachse zu verschieben. Der Sockel wird an der Innenseite der Wand angebracht. Er wird gegen die Innenseite der Wand mit einem schwenkbaren Flansch verankert, der die Form eines Bügels in U-Form hat und eine Verriegelungsschraube mit spitzem Ende besitzt.

Dieser Flansch wird aus zwei Verankerungsarmen gebildet, die durch eine Brücke verbunden sind. Die Klemmschraube wird nun in eine Mutterplatte geschraubt, die schwenkbar zwischen den Verankerungsarm montiert ist. Die Schraube wird in eine Bohrung des Körpers geführt. Die Mutterplatte ist mittels eines Gelenks am Flansch beweglich angebracht. Die Drehverschiebung der Mutterplatte ist durch Anschläge begrenzt, die im Gelenk angebracht sind.

Dazu geht aus der DE 33 40 659 A1 ein Befehls- oder Meldegerät hervor mit einem Frontteil und mindestens einem rückwärtigen Schaltelement, die jeweils von entgegen gesetzten Seiten an einer Schalttafel montiert werden müssen. Um das Befehls- oder Meldegerät von einer einzigen Person einfach und sicher montieren zu können, ist es vorgesehen, ein von der Rückseite her in den Durchbruch der Schalttafel einzusteckenden Montagesockel zu verwenden, der ein oder mehrere an der Frontseite, den Rand des Durchbruchs hintergreifende Schnappnasen und eine gegen die Schalttafelrückseite anziehbare Klemmeinrichtung aufweist, die ebenfalls von der Schalttafelrückseite her bedienbar ist, so dass der Montagesockel für sich bereits dauerhaft an der Schalttafel festspannbar ist.

Der Nachteil der aus dem Stand der Technik bekannten Befehls- und Meldegeräte besteht darin, dass diese Geräte aufgrund der Vielzahl kleiner Einzelteile nicht montagefreundlich ausgeführt ist und somit zu einem komplizierten Zusammenbau führt.

Demgemäß besteht die Aufgabe der vorliegenden Erfindung darin, ein Befehls- und Meldegerät zu schaffen, das einen unkomplizierten Zusammenbau ermöglicht.

Diese Aufgabe wird durch ein Befehls- und Meldegerät mit den Merkmalen des Patentanspruchs 1 gelöst. Vorteilhafte Aus- und Weiterbildungen, welche einzeln oder in Kombination miteinander eingesetzt werden können, sind der Gegenstand der abhängigen Ansprüche.

Erfindungsgemäß wird diese Aufgabe durch ein Befehls- und Meldegerät gelöst mit einem Bedienelement, das einen zylindrischen Grundkörper aufweist, und einer Haltevorrichtung zur Befestigung des Bedienelements. Die Erfindung zeichnet sich dabei dadurch aus, dass der zylindrische Grundkörper des Bedienelements in ein Gewinde aufweisendes Zahnrad eingefasst ist, das in Wirkverbindung mit einem Ritzel steht, über welches die Endfixierung des Bedienelements in der Haltevorrichtung ausgebildet ist und wobei die Vorfixierung des Bedienelements in der Haltevorrichtung durch einen Schnapphaken oder durch eine Verrastung in der Haltevorrichtung erfolgt. Das erfindungsgemäße Befehls- und Meldegerät kann als einteilig kombiniertes Haltesystem ausgebildet sein, das heißt, der Festsitz des Bedienelements erfolgt mit einem Haltesystem, welches additiv den Festsitz der Funktionsmodule beinhaltet. Das einteilig kombinierte Haltesystem kann sowohl für den Einsatz bei modularer, als auch bei kompakter Bauform einer Befehlsstelle geeignet sein. Das Haltesystem wird lageorientiert auf das Bedienelement aufgesetzt und bewirkt eine zwangsläufige Vorfixierung zum Bedienelement. Die Vorfixierung erleichtert die nachfolgenden Montageschritte einer kompletten Befehlsstelle. Das Haltesystem in kompakter Bauform ist für die Kunststoff- und Metallbaureihe einsetzbar.

Das Haltesystem ermöglicht es, dass die komplette Kraftübertragung bei der Befestigung einer Befehlsstelle von nur zwei Teilen gewährleistet wird. Dies sind hier das Gewinde aufweisende Zahnrad und der zylindrische Grundkörper, der auch als Rosette bezeichnet werden kann. Beim erfindungsgemäßen Haltesystem ist es möglich, die Befestigungskontur von der Rosette so nah wie möglich an die Befestigungsplatte zu positionieren. Dadurch lassen sich hohe Anzugskräfte und Verdrehmomente zum Festsitz der Befehlsstelle erzeugen. Das Haltesystem ermöglicht eine Vorfixierung zum Bedienelement, womit ein vereinfachtes Handling bei der kompletten Montage einer Befehlsstelle verbunden ist. Somit werden Montagezeiten beim Kunden verkürzt.

Der Festsitz des erfindungsgemäßen Haltesystems mit befestigten Modulen erfolgt auf zwei getrennten Wegen. Zum Einen wird eine Vorfixierung dadurch erreicht, dass der zylindrische Grundkörper des Bedienelements durch einen Schnapphaken in der Befehlsstelle positioniert wird. Zum Anderen wird die Endfixierung durch ein Gewinde aufweisendes Zahnrad umgesetzt, in welchem der zylindrische Grundkörper angeordnet ist und die Verschiebung dieses Gewinde aufweisenden Zahnrads in Richtung Befestigungsplatte bewerkstelligt. Sollte beim Gebrauch ein Haltemechanismus versagen, wird über den zweiten Haltemechanismus der Festsitz weiterhin gewährleistet. Durch das Festziehen des Gewinde aufweisenden Zahnrads bewegt sich das Zahnrad in Richtung Schalttafel und versperrt das Lösen der Vorfixierung, also des Schnapphakens.

Die Demontage des erfindungsgemäßen Befehls- und Meldegeräts benötigt nur einen Montageschritt. Dieser Schritt besteht in der Drehung des Ritzels. Zusätzliche Arbeitsschritte, wie zum Beispiel Lösen der Vorfixierung sind nicht notwendig.

Ein weiterer Vorteil besteht darin, dass die großflächige Krafteinleitung des Gewinde aufweisenden Zahnrads auf die Fronttafel eine geringe Flächenpressung bewirkt. Dadurch lassen sich Befehlsgeräte auch in Fronttafeln mit geringer Steifigkeit, das heißt, sehr dünne Fronttafeln, ohne Verformung der Fronttafel zur Gewährleistung der Dichtfunktion montieren.

Für die Montage und Demontage der kompletten Befehlsstelle kann das Haltesystem mit Modulen vormontiert sein. Zusätzlich können die Module in einem vorgelagerten Arbeitsschritt bereits angeschlossene Leiter haben. Dies bewirkt beim Kunden eine Verkürzung der Montagezeit. Für die Montage und Demontage benötigt man kein spezielles Werkzeug.

Ein weiterer entscheidender Vorteil für das erfindungsgemäße Befehls- und Meldegerät besteht darin, dass das einteilige Haltesystem eine geringe Anzahl von Einzelteilen aufweist und somit eine kostengünstige Lösung bietet.

Erfindungsgemäß ist vorgesehen, dass die Vorfixierung des Bedienelements in der Haltevorrichtung über einen Schnapphaken erfolgen kann. Ebenso ist es jedoch auch möglich, dass die Vorfixierung über eine Verrastung erfolgt. Die Vorfixierung dient lediglich der ersten Positionierung des Bedienelements in der Haltevorrichtung.

Es kann erfindungsgemäß weiterhin vorgesehen sein, dass die Kombination aus Bedienelement und Haltevorrichtung derart ausgebildet ist, dass ein Funktionsmodul direkt an der Kombination aus Bedienelement und Haltevorrichtung fixierbar ist. Bei dieser Ausführungsform ist also vorgesehen, dass der Festsitz der Funktionsmodule vom Haltesystem additiv gewährleist wird und sich somit ein modularer Aufbau ergibt.

Erfindungsgemäß kann in einer Ausführungsform auch vorgesehen sein, dass zwischen der Kombination aus Bedienelement und Haltevorrichtung und einem Funktionsmodul ein Trägerelement angeordnet ist, das zur Fixierung des Funktionsmoduls am Trägerelement und auf die Weise zur Fixierung an der Kombination aus Bedienelement und Haltevorrichtung ausgebildet ist.

In einer weiteren Ausführungsform kann es erfindungsgemäß auch vorgesehen sein, dass im Bedienelement ein Funktionsmodul integriert ist.

Erfindungsgemäß ist bei der Endfixierung vorgesehen, dass sich das Zahnrad in Richtung einer Schalttafel bewegt, die zwischen Betätiger und Haltevorrichtung angeordnet ist. Dabei wird das Zahnrad über ein Ritzel bewegt, das sich drehen lässt.

Daraus ergibt sich erfindungsgemäß, dass die komplette Kraftübertragung bei der Befestigung des Bedienelements an der Haltevorrichtung über zwei Teile, das Gewinde aufweisende Zahnrad und den zylindrischen Grundkörper, realisiert ist. Fertigungstechnisch kann erfindungsgemäß vorgesehen sein, dass das Befehls- und Meldegerät sowohl aus Kunststoff als auch aus Metall gefertigt sein kann.

In einer weiteren Ausführungsform kann vorgesehen sein, dass das Lösen der Vorfixierung, die über einen Schnapphaken ausgebildet ist, durch Betätigen des Gewinde aufweisenden Zahnrads bis zum Anschlag erfolgt.

Erfindungsgemäß kann weiterhin vorgesehen sein, dass der Haltemechanismus für die Vorfixierung und der Haltemechanismus für die Endfixierung redundant ausgebildet sind.

Das Verfahren zur Montage eines Befehls- und Meldegeräts mit einem Bedienelement, das einen zylindrischen Grundkörper aufweist, und einer Haltevorrichtung zur Befestigung des Bedienelements weist folgende Schritte auf:
- Einführen des Bedienelements in ein in der Haltevorrichtung angeordnetes Gewinde aufweisendes Zahnrad;
- Vorfixieren des Bedienelements in der Haltevorrichtung;
- Endfixierung des Bedienelements mittels des Gewinde aufweisenden Zahnrades.

Das Verfahren zur Demontage eines Befehls- und Meldegeräts mit einem Bedienelement, das einen zylindrischen Grundkörper (3) aufweist, und einer Haltevorrichtung (4) zur Befestigung des Bedienelements (1) weist folgende Schritte auf:
- Lösen der Endfixierung und entriegeln der Vorfixierung des Bedienelements (1) aus der Haltevorrichtung (4) durch Drehen eines Ritzels (7), das in Wirkverbindung mit einem Gewinde aufweisenden Zahnrad (6) steht, bis zum Anschlag;

Das erfindungsgemäße Befehls- und Meldegerät weist ein Bedienelement auf, das einen Betätiger und einen zylindrischen Grundkörper umfasst, wobei der Betätiger vorzugsweise einen größeren Durchmesser haben kann als der zylindrische Grundkörper. Das Befehls- und Meldegerät weist zudem eine Haltevorrichtung auf, in welcher das Bedienelement eingeführt wird. Zwischen Betätiger des Bedienelements und der Haltevorrichtung ist eine Schalttafel angeordnet. In der Haltevorrichtung ist ein Gewinde aufweisendes Zahnrad positioniert, das über ein Ritzel angetrieben wird. Im Gewinde aufweisenden Zahnrad ist der zylindrische Grundkörper des Bedienelements positioniert. Die Vorfixierung des Bedienelements in der Haltevorrichtung erfolgt durch einen Schnapphaken oder eine Verrastung in der Haltevorrichtung. Die Endfixierung ergibt sich durch Drehen des Ritzels, das in das Zahnrad greift und dieses dadurch in Richtung Schalttafel bewegt.

Das erfindungsgemäße Befehls- und Meldegerät zeichnet sich durch einen einfachen Zusammenbau aus, der in zwei Schritten erfolgt. Bei der Vorfixierung wird das Bedienelement in die Haltevorrichtung eingeführt und positioniert sich dort mittels eines Schnapphakens oder einer Verrastung. Die Endfixierung erfolgt über das in der Haltevorrichtung angeordnete Zahnrad, das über ein Ritzel angetrieben wird und sich während der Endfixierung in Richtung Schalttafel bewegt. Das erfindungsgemäße Befehls- und Meldegerät eignet sich sowohl für den modularen Aufbau als auch für die kompakte Bauform, wobei es sowohl aus Kunststoff als auch aus Metall gefertigt sein kann.

Weitere Vorteile und Ausführungen der Erfindung werden nachfolgend anhand von Ausführungsbeispielen sowie anhand der Zeichnung erläutert.

Dabei zeigen schematisch:
Fig. 1 in einer Schnittdarstellung ein erfindungsgemäßes Befehls- und Meldegerät im vorfixierten Zustand;
Fig. 2 in einer Schnittdarstellung das erfindungsgemäße Befehls- und Meldegerät nach Fig. 1 im Zustand nach der Endfixierung;
Fig. 3 in einer Seitenansicht das Befehls- und Meldegerät nach Fig. 2 im Zustand der Endfixierung;
Fig. 4 in einer Draufsicht das Zusammenwirken aus Zahnrad und Ritzel.

Das erfindungsgemäße Befehls- und Meldegerät weist ein Bedienelement 1 auf, das einen Betätiger 2 mit einem zylindrischen Grundkörper 3 umfasst, wobei der Betätiger 2 vorzugsweise einen größeren Durchmesser haben kann als der zylindrische Grundkörper 3. Das Befehls- und Meldegerät weist zudem eine Haltevorrichtung 4 auf, in welche das Bedienelement 1 eingeführt wird. Zwischen Betätiger 2 des Bedienelements 1 und der Haltevorrichtung 4 ist eine Schalttafel 5 angeordnet. In der Haltevorrichtung 4 ist ein Gewinde aufweisendes Zahnrad 6 positioniert, das über ein Ritzel 7 angetrieben wird. Im Gewinde aufweisenden Zahnrad 6 ist der zylindrische Grundkörper 3 des Bedienelements 1 positioniert. Die Vorfixierung des Bedienelements 1 in der Haltevorrichtung 4 erfolgt durch einen Schnapphaken oder durch eine Verrastung in der Haltevorrichtung 4. Die Endfixierung ergibt sich durch Drehen des Ritzels 7, das in das Zahnrad 6 greift und dieses dadurch in Richtung Schalttafel 5 bewegt.

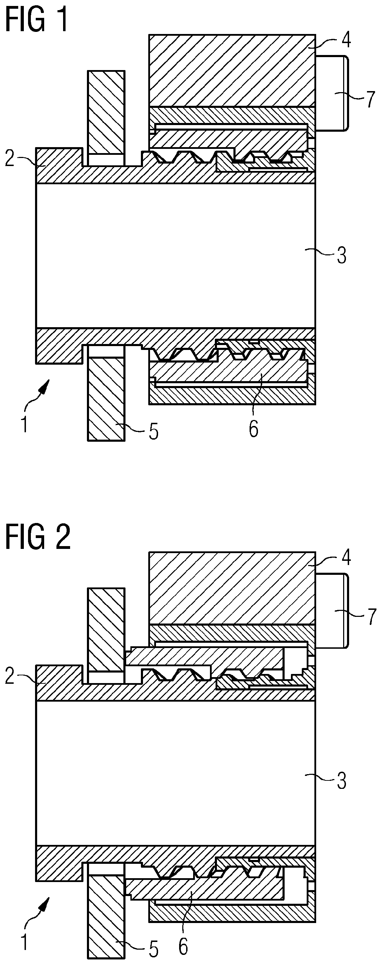

In Fig. 2 ist das erfindungsgemäße Befehls- und Meldegerät nach Fig. 1 im Zustand der Endfixierung dargestellt. Das Gewinde aufweisende Zahnrad 6 hat sich nun durch Drehen des Ritzels 7 in Richtung der Schalttafel 5 bewegt.

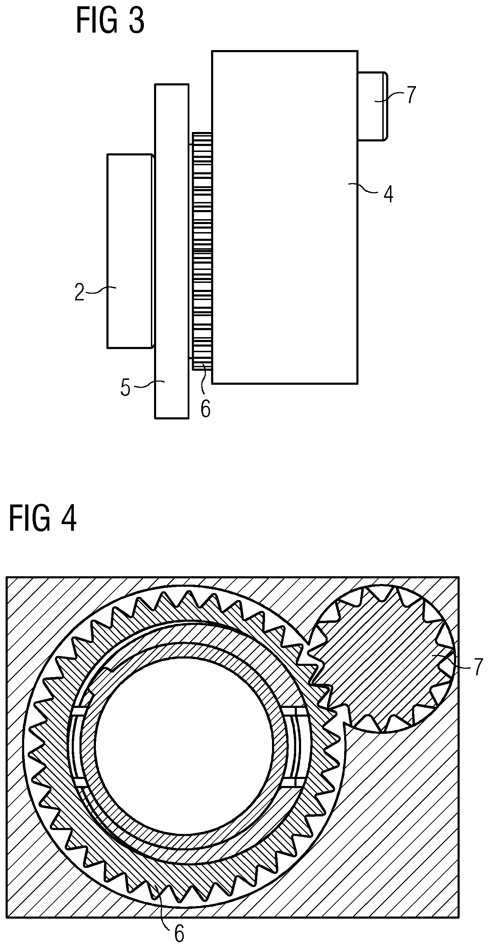

Die Endfixierung des Bedienelements 1 in der Haltevorrichtung 4 geht auch aus Fig. 3 hervor, die zwischen Schalttafel 5 und Haltevorrichtung 4 das Gewinde aufweisende Zahnrad 6 zeigt.

Fig. 4 zeigt das Zusammenwirken zwischen Gewinde aufweisendem Zahnrad 6 und Ritzel 7.

Das erfindungsgemäße Befehls- und Meldegerät zeichnet sich durch einen einfachen Zusammenbau aus, der in zwei Schritten erfolgt. Bei der Vorfixierung wird das Bedienelement in die Haltevorrichtung eingeführt und positioniert sich dort mittels eines Schnapphakens oder einer Verrastung. Die Endfixierung erfolgt über das in der Haltevorrichtung angeordnete Gewinde aufweisende Zahnrad, das über ein Ritzel angetrieben wird und sich während der Endfixierung in Richtung Schalttafel bewegt. Das erfindungsgemäße Befehls- und Meldegerät eignet sich sowohl für den modularen Aufbau als auch für die kompakte Bauform, wobei es sowohl aus Kunststoff als auch aus Metall gefertigt sein kann.

## Patentansprüche

1. Befehls- und Meldegerät mit einem Bedienelement (1), das einen zylindrischen Grundkörper (3) aufweist, und einer Haltevorrichtung (4) zur Befestigung des Bedienelements (1), wobei der zylindrische Grundkörper (3) des Bedienelements (1) in ein Gewinde aufweisendes Zahnrad (6) eingefasst ist, das in Wirkverbindung mit einem Ritzel (7) steht, über welches die Endfixierung des Bedienelements (1) in der Haltevorrichtung (4) ausgebildet ist, **dadurch gekennzeichnet, dass** das Gewinde aufweisende Zahnrad in der Haltevorrichtung positioniert ist und dass sich das Gewinde aufweisende Zahnrad (6) bei der Endfixierung in Richtung einer Schalttafel (5) bewegt, die zwischen einem Betätiger (2) des Bedienelementes (1) und der Haltevorrichtung (4) angeordnet ist und dass die Vorfixierung des Bedienelements (1) in der Haltevorrichtung (4) durch einen Schnapphaken oder durch eine Verrastung in der Haltevorrichtung (4) erfolgt.

2. Befehls- und Meldegerät nach Anspruch 1,
**dadurch gekennzeichnet, dass** die Kombination aus Bedienelement (1) und Haltevorrichtung (4) derart ausgebildet ist, dass ein Funktionsmodul direkt an der Kombination aus Bedienelement (1) und Haltevorrichtung (4) fixierbar ist.

3. Befehls- und Meldegerät nach Anspruch 1,
**dadurch gekennzeichnet, dass** zwischen der Kombination aus Bedienelement (1) und Haltevorrichtung (4) und einem Funktionsmodul ein Trägerelement angeordnet ist, das zur Fixierung des Funktionsmoduls am Trägerelement und so an der Kombination aus Bedienelement (1) und Haltevorrichtung (4) ausgebildet ist.

4. Befehls- und Meldegerät nach Anspruch 1,
**dadurch gekennzeichnet, dass** im Bedienelement (1) ein Funktionsmodul integriert ist.

5. Befehls- und Meldegerät nach einem der Ansprüche 1 bis 4, **dadurch gekennzeichnet, dass** die komplette Kraftübertragung bei der Befestigung des Bedienelements (1) an der Haltevorrichtung (4) über zwei Teile, das Gewinde aufweisende Zahnrad (6) und den zylindrischen Grundkörper (3), realisiert ist.

6. Befehls- und Meldegerät nach einem der Ansprüche 1 bis 5, **dadurch gekennzeichnet, dass** das Befehls- und Meldegerät aus Kunststoff gefertigt ist.

7. Befehls- und Meldegerät nach einem der Ansprüche 1 bis 5, **dadurch gekennzeichnet, dass** das Befehls- und Meldegerät aus Metall gefertigt ist.

## Claims

1. Control and signalling device with an operating element (1), which has a cylindrical main body (3), and a holding device (4), for fastening the operating element (1), wherein the cylindrical main body (3) of the operating element (1) is enclosed in a gear wheel (6), which has a thread and is in operative connection with a pinion (7), by way of which the end fixing of the operating element (1) in the holding device (4) is formed, **characterized in that** the gear wheel having a thread is positioned in the holding device and **in that** in the end fixing the gear wheel (6) having a thread moves in the direction of a circuit board (5), which is arranged between an actuator (2) of the operating element (1) and the holding device (4), and **in that** the pre-fixing of the operating element (1) in the holding device (4) takes place by a snap hook or by a locking means in the holding device (4).

2. Control and signalling device according to Claim 1, **characterized in that** the combination comprising the operating element (1) and the holding device (4) is designed in such a way that a functional module can be fixed directly on the combination comprising the operating element (1) and the holding device (4).

3. Control and signalling device according to Claim 1, **characterized in that** between the combination comprising the operating element (1) and the holding device (4) and a functional module there is arranged a carrier element, which is designed for fixing the functional module on the carrier element and so is formed on the combination comprising the operating element (1) and the holding device (4).

4. Control and signalling device according to Claim 1, **characterized in that** a functional module is integrated in the operating element (1).

5. Control and signalling device according to one of Claims 1 to 4, **characterized in that**, when the operating element (1) is fastened on the holding device (4), the complete force transmission is realized by way of two parts, the gear wheel (6) having a thread and the cylindrical main body (3).

6. Control and signalling device according to one of Claims 1 to 5, **characterized in that** the control and signalling device is produced from plastic.

7. Control and signalling device according to one of Claims 1 to 5, **characterized in that** the control and signalling device is produced from metal.

## Revendications

1. Appareil de commande et de signalisation avec un élément de commande (1) qui présente un corps de base cylindrique (3), et un dispositif de retenue (4) destiné à la fixation de l'élément de commande (1), dans lequel le corps de base cylindrique (3) de l'élément de commande (1) est enchâssé dans une roue dentée (6) présentant un filetage, la roue dentée étant en liaison active avec un pignon (7) par l'intermédiaire duquel la fixation définitive de l'élément de commande (1) dans le dispositif de retenue (4) est configurée, **caractérisé en ce que** la roue dentée présentant un filetage est positionnée dans le dispositif de retenue et **en ce que** la roue dentée (6) présentant un filetage se déplace lors de la fixation définitive dans la direction d'un tableau de distribution (5) qui est disposé entre un actionneur (2) de l'élément de commande (1) et le dispositif de retenue (4) et **en ce que** la fixation provisoire de l'élément de commande (1) dans le dispositif de retenue (4) s'effectue par le biais d'un crochet à déclic ou par le biais d'un enclenchement dans le dispositif de retenue (4).

2. Appareil de commande et de signalisation selon la revendication 1, **caractérisé en ce que** la combinaison de l'élément de commande (1) et du dispositif de retenue (4) est configurée de telle sorte qu'un module fonctionnel peut être fixé directement à la combinaison de l'élément de commande (1) et du dispositif de retenue (4).

3. Appareil de commande et de signalisation selon la revendication 1, **caractérisé en ce que**, entre la combinaison de l'élément de commande (1) et du dispositif de retenue (4) et un module fonctionnel est disposé un élément de support qui est réalisé pour la fixation du module fonctionnel à l'élément de support et ainsi à la combinaison de l'élément de commande (1) et du dispositif de retenue (4).

4. Appareil de commande et de signalisation selon la revendication 1, **caractérisé en ce que** dans l'élément de commande (1) est intégré un module fonctionnel.

5. Appareil de commande et de signalisation selon l'une des revendications 1 à 4, **caractérisé en ce que** la transmission complète de forces est configurée lors de la fixation de l'élément de commande (1) au dispositif de retenue (4) par l'intermédiaire de deux pièces, la roue dentée (6) présentant un filetage et le corps de base cylindrique (3).

6. Appareil de commande et de signalisation selon l'une des revendications 1 à 5, **caractérisé en ce que** l'appareil de commande et de signalisation est fabriqué à partir de matière plastique.

7. Appareil de commande et de signalisation selon l'une des revendications 1 à 5, **caractérisé en ce que** l'appareil de commande et de signalisation est fabriqué à partir de métal.
